# EUROPEAN PATENT APPLICATION

(11) **EP 4 722 396 A1**
(43) Date of publication of application: **08.04.2026**
(21) Application number: 25199076.8
(22) Date of filing: 29.08.2025
(51) Int. Cl.: C22B 1/00, C22B 3/14, C22B 3/22, C22B 7/00, C22B 3/00, C22B 47/00, H01M 10/54, C22B 5/02

(54) **METHOD FOR RECYCLING POSITIVE ELECTRODE MATERIAL**

(30) Priority: 19.09.2024 JP 2024161566
(71) Applicant: Prime Planet Energy & Solutions, Inc., Chuo-ku, Tokyo 103-0022 (JP)
(72) Inventor: SUZUKI, Shinya, Tokyo, 103-0022 (JP)
(74) Representative: Kuhnen & Wacker Patent- und Rechtsanwaltsbüro PartG mbB

(57) **Abstract**

The present disclosure provides a new method capable of efficiently collecting Ni, Co, and Mn from battery waste containing Ni, Co, and Mn. A method for recycling a positive electrode material according to the present disclosure includes: a Mn leaching step of leaching Mn into an aqueous phase by performing ammonia leaching on battery waste containing Ni, Co, and Mn under a condition that a Mn leaching rate is 70% or more, and a ratio of the Mn leaching rate is 65% or more with respect to a total of a Ni leaching rate, a Co leaching rate, and the Mn leaching rate; and a Ni and Co leaching step of leaching Ni and Co into an aqueous phase by performing ammonia leaching on a solid residue obtained in the Mn leaching step under a condition that a Mn leaching rate is less than 1%.

## Description

### TECHNICAL FIELD

The present disclosure relates to a method for recycling a positive electrode material.

### BACKGROUND ART

Lithium ion secondary batteries are widely used in various fields as power supplies for driving vehicles, portable power supplies, and other applications. In recent years, material recycling of used lithium ion secondary batteries has been promoted from the perspective of SDGs. In lithium ion secondary batteries, various metal elements are used, and for material recycling, techniques for separating metal elements contained in used lithium ion secondary batteries have been developed.

One of materials often used as a positive electrode active material of a lithium ion secondary battery is a so-called ternary positive electrode active material, that is, a lithium nickel cobalt manganese composite oxide, containing Ni, Co, and Mn. Thus, waste of lithium ion secondary batteries often contains Ni, Co, and Mn. In view of this, in Non-patent Document 1, a leaching solution containing ammonia and ammonium sulfate, and sodium sulfite as a reducing agent are used to selectively separate Ni and Co from Ni, Co, Mn, and Al contained in waste of positive electrodes of used lithium ion secondary batteries.

### CITATION LIST

### Patent Document

Non-patent Document 1: Waste Management, February 2017, vol. 60, pp. 680-688

### SUMMARY OF INVENTION

However, in the conventional technique, Mn is separated from Ni and Co. Thus, in the case of recycling a lithium nickel cobalt manganese composite oxide, there arises a problem that Mn needs to be newly added to collected Ni and Co.

It is therefore an object of the present disclosure to provide a new method capable of efficiently collecting Ni, Co, and Mn from battery waste containing Ni, Co, and Mn.

A method for recycling a positive electrode material according to the present disclosure includes: a Mn leaching step of leaching Mn into an aqueous phase by performing ammonia leaching on battery waste containing Ni, Co, and Mn under a condition that a Mn leaching rate is 70% or more, and a ratio of the Mn leaching rate is 65% or more with respect to a total of a Ni leaching rate, a Co leaching rate, and the Mn leaching rate; and a Ni and Co leaching step of leaching Ni and Co into an aqueous phase by performing ammonia leaching on a solid residue obtained in the Mn leaching step under a condition that a Mn leaching rate is less than 1%.

This configuration enables Ni, Co, and Mn to be efficiently collected from battery waste containing Ni, Co, and Mn.

### BRIEF DESCRIPTION OF DRAWINGS

[FIG. 1] FIG. 1 is a flowchart showing each of steps of a method for recycling a positive electrode material according to the present disclosure.
[FIG. 2] FIG. 2 is a longitudinal cross-sectional view schematically illustrating an internal structure of an example of a lithium ion secondary battery.
[FIG. 3] FIG. 3 is a schematic disassembled view illustrating a configuration of an electrode body of the lithium ion secondary battery shown in FIG. 2.
[FIG. 4] FIG. 4 is a schematic cross-sectional view of a positive electrode of the lithium ion secondary battery shown in FIG. 2.

### DESCRIPTION OF EMBODIMENTS

Embodiments of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and common general knowledge in the field. In the drawings, members and parts having the same functions are denoted by the same reference characters for description. Dimensional relationships (e.g., length, width, and thickness) in the drawings do not necessarily reflect actual dimensional relationships. It should be noted that a numerical range expressed as "A to B" herein includes A and B.

It should be noted that a "secondary battery" herein refers to a power storage device capable of being repeatedly charged and discharged. A "lithium ion secondary battery" herein refers to a secondary battery that uses lithium ions as charge carriers and performs charge and discharge by movement of charges accompanying lithium ions between positive and negative electrodes.

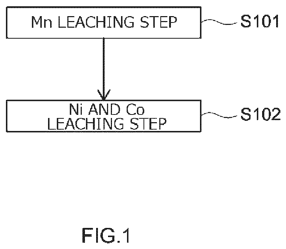

As illustrated in FIG. 1, a method for recycling a positive electrode material according to the present disclosure includes: a Mn leaching step S101 of leaching Mn into an aqueous phase by performing ammonia leaching on battery waste containing Ni, Co, and Mn under a condition that a Mn leaching rate is 70% or more, and a ratio of the Mn leaching rate is 65% or more with respect to a total of a Ni leaching rate, a Co leaching rate, and the Mn leaching rate; and a Ni and Co leaching step S102 of leaching Ni and Co into an aqueous phase by performing ammonia leaching on a solid residue obtained in the Mn leaching step under a condition that a Mn leaching rate is less than 1%.

### <Lithium Ion Secondary Battery>

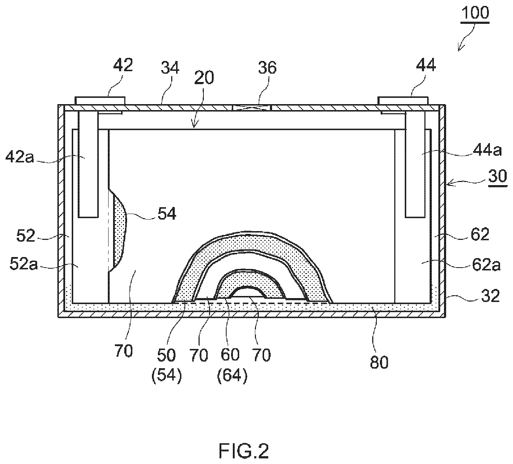

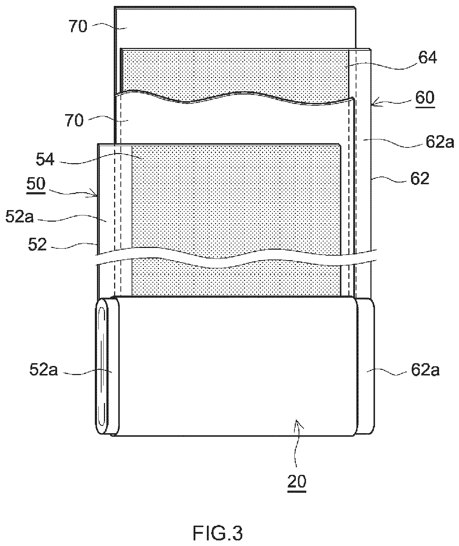

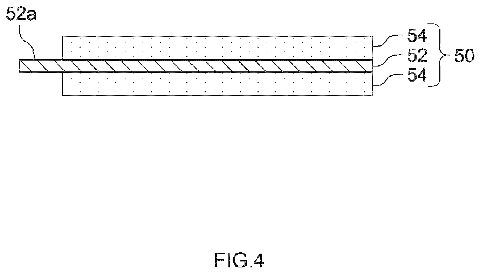

First, a method for recycling a positive electrode material according to the present disclosure relates to material recycling of a secondary battery (especially lithium ion secondary battery). First, a general configuration example of a lithium ion secondary battery will be described. FIGS. 2 and 3 illustrate an example of a configuration of a lithium ion secondary battery. FIG. 2 is a longitudinal cross-sectional view schematically illustrating an internal structure of an example of a lithium ion secondary battery. FIG. 3 is a disassembled view schematically illustrating an electrode body of the lithium ion secondary battery shown in FIG. 2. FIG. 4 is a schematic cross-sectional view taken along the thickness direction of a positive electrode of the lithium ion secondary battery shown in FIG. 2. It should be noted that the following description of the lithium ion secondary battery is for convenience of understanding, and does not limit the method for recycling a positive electrode material of the present disclosure.

As illustrated in FIG. 2, a lithium ion secondary battery 100 is a sealed battery in which a flat electrode body 20 and a nonaqueous electrolyte (not shown) are housed in a battery case 30. As illustrated in FIG. 2, the battery case 30 includes an outer case 32 housing the electrode body 20, and a lid 34 sealing an opening of the outer case 32. The outer case 32 and the lid 34 are sealed by welding such as laser welding. Examples of a material for the battery case 30 include aluminum, an aluminum alloy, and resin.

In the illustrated example, the battery case 30 is rectangular. The shape of the battery case 30 is, however, not limited to this example, and may be, for example, cylindrical. Alternatively, the battery case 30 may be a laminated case including a gas barrier layer such as an aluminum layer and a sealant layer including a thermoplastic resin, for example.

The battery case 30 includes a positive electrode terminal 42 and a negative electrode terminal 44 for external connection. The battery case 30 also includes a safety valve 36 configured to release the internal pressure of the battery case 30 when the internal pressure increases to a predetermined level or more. The battery case 30 has an injection port (not shown) for injecting the nonaqueous electrolyte. The positive electrode terminal 42 is electrically connected to a positive electrode current collector plate 42a. The negative electrode terminal 44 is electrically connected to a negative electrode current collector plate 44a.

As illustrated in FIGS. 2 and 3, the electrode body 20 has a configuration in which an elongated positive electrode sheet 50 and an elongated negative electrode sheet 60 are stacked with two long separator sheets 70 interposed therebetween and wound in the longitudinal direction. Therefore, in this embodiment, the electrode body 20 is a wound electrode body. The electrode body 20 is, however, not limited to this example, and may be a stacked-type electrode body in which a plurality of positive electrodes and a plurality of negative electrodes are alternately stacked with separators interposed therebetween.

As illustrated in FIGS. 2 and 4, in the positive electrode sheet 50, a positive electrode active material layer 54 is formed on one or each (each in this example) surface of a positive electrode current collector 52 along the longitudinal direction. The positive electrode sheet 50 includes a positive electrode active material layer non-formed portion 52a in which the positive electrode active material layer 54 is not formed and the positive electrode current collector 52 is exposed. The positive electrode current collector plate 42a is joined to the positive electrode active material layer non-formed portion 52a.

Examples of the positive electrode current collector 52 constituting the positive electrode sheet 50 include aluminum foil. The positive electrode active material layer 54 contains a positive electrode active material. The positive electrode active material is typically a lithium nickel cobalt manganese composite oxide. The positive electrode active material layer 54 may include conductive materials (e.g., carbon black and carbon nanotubes), binders (e.g., polyvinylidene fluoride), and the like.

The content of the positive electrode active material in the positive electrode active material layer 54 is desirably 70% by mass or more, more desirably 85% by mass or more and 99% by mass or less. The content of the conductive material in the positive electrode active material layer 54 is desirably 0.1 % by mass or more and 20 % by mass or less, more desirably 0.3 % by mass or more and 15 % by mass or less. The content of the binder in the positive electrode active material layer 54 is desirably 0.4 % by mass or more and 15 % by mass or less, more desirably 0.5 % by mass or more and 10 % by mass or less.

As illustrated in FIG. 3, in the negative electrode sheet 60, a negative electrode active material layer 64 is formed on one or each (each in this example) surface of a negative electrode current collector 62 along the longitudinal direction. The negative electrode sheet 60 includes a negative electrode active material layer non-formed portion 62a in which the negative electrode active material layer 64 is not formed and the negative electrode current collector 62 is exposed. The negative electrode current collector plate 44a is joined to the negative electrode active material layer non-formed portion 62a.

Examples of the negative electrode current collector 62 constituting the negative electrode sheet 60 include copper foil. The negative electrode active material layer 64 contains a negative electrode active material. Examples of the negative electrode active material include carbon-based negative electrode active materials (e.g., graphite, hard carbon, and soft carbon) and silicon-based negative electrode active materials (e.g., silicon and silicon oxide). The negative electrode active material layer 64 may include a binder (e.g., styrenebutadiene rubber (SBR)), a thickener (e.g., carboxymethyl cellulose (CMC)), and so forth.

The content of graphite in the negative electrode active material layer 64 is desirably 90 % by mass or more, more desirably 95 % by mass or more and 99 % by mass or less. The content of the binder in the negative electrode active material layer 64 is desirably 0.1 % by mass or more and 8 % by mass or less, more desirably 0.5 % by mass or more and 3 % by mass or less. The content of the thickener in the negative electrode active material layer 64 is desirably 0.3 % by mass or more and 3 % by mass or less, more desirably 0.5 % by mass or more and 2 % by mass or less.

Examples of the separators 70 include a porous resin sheet of polyethylene, polypropylene, and the like. The porous sheet may have a single-layer structure or a multilayer structure. A heat-resistance layer (HRL) may be provided on a surface of each separator 70.

The nonaqueous electrolyte typically includes a nonaqueous solvent and a supporting electrolyte (i.e., electrolyte salt). Examples of the nonaqueous solvent include carbonates (e.g., ethylene carbonate, ethyl methyl carbonate, dimethyl carbonate), esters, and ethers. Examples of the supporting electrolyte include lithium salts such as LiPF₆. The concentration of the supporting electrolyte is not particularly limited, and is desirably 0.7 mol/L to 1.3 mol/L. The nonaqueous electrolyte may include various additives such as a gas generating agent and a film forming agent. It should be noted that in this embodiment, a nonaqueous electrolyte is used as the electrolyte, but the electrolyte may be a solid electrolyte.

The lithium ion secondary battery 100 is used for, for example, power supply applications such as in-vehicle application (i.e., for a power supply for driving vehicles such as battery electric vehicles (BEVs), hybrid electric vehicles (HEVs), and plug-in hybrid electric vehicles (PHEVs)), and for a power supply for electronic equipment.

As described above, in the positive electrode of the lithium ion secondary battery, Li, Ni, Co, and Mn are typically used as constituent metal elements of a lithium nickel cobalt manganese composite oxide that is a positive electrode active material. Al is generally used for the positive electrode current collector. Cu is generally used in the negative electrode current collector. In addition, in the lithium ion secondary battery, Li is used for the nonaqueous electrolyte. Additionally, Al may be used for the battery case.

### <Mn Leaching Step S101>

In a Mn leaching step S101, battery waste containing Ni, Co, and Mn is used. Ni, Co, and Mn contained in the battery waste are typically derived from the lithium nickel cobalt manganese composite oxide used as the positive electrode active material. However, Ni, Co, and Mn contained in the battery waste are not limited to this. It should be noted that the "battery waste" herein includes not only used lithium ion secondary batteries but also constituent members of used lithium ion secondary batteries, defective lithium ion secondary batteries, and constituent members of defective lithium ion secondary batteries. The waste may be subjected to some treatment (e.g., roasting treatment).

Specific examples of the battery waste include black mass from used lithium ion secondary batteries (in particular, black mass obtained by crushing and roasting a used lithium ion secondary battery), positive electrode waste from used lithium ion secondary batteries, electrode body waste from used lithium ion secondary batteries, waste of positive electrodes deemed defective in manufacturing, waste of electrode bodies deemed defective in manufacturing, and positive electrode active materials deemed defective in manufacturing.

The waste more desirably contains Ni and Co as metals, and Mn as a divalent oxide. From this viewpoint, the waste is desirably subjected to reduction-roasting. The waste is desirably black mass obtained by crushing and reduction-roasting a used lithium ion secondary battery.

Specifically, for example, the black mass may be obtained by crushing a lithium ion secondary battery according to a known method and, when necessary, subjected to sieving, and roasted at 400°C to 1500°C (desirably 700°C to 1000°C) in an atmosphere (especially, an atmosphere of inert gas such as argon gas and nitrogen gas) with an oxygen concentration of 5 % by volume or less (desirably 1 % by volume or less) for 1 hour to 24 hours (desirably 4 hours to 12 hours).

The battery waste may further contain elements (especially metal elements) other than Ni, Co, and Mn. For example, the battery waste may further contain Li, Al, and other elements, as well as Ni, Co, and Mn. The battery waste may further contain a transition metal element other than Ni, Co, and Mn. The battery waste may further contain Cu. In particular, in a case where the battery waste is waste of a lithium ion secondary battery or an electrode body, the battery waste generally further contains Cu derived from a negative electrode current collector.

In the Mn leaching step S101, ammonia leaching is performed. A leaching agent used for ammonia leaching is desirably an ammonia aqueous solution including water, ammonia (NH₃), and a pH adjuster such as ammonium sulfate ((NH₄)₂SO₄) or ammonium carbonate ((NH₄)₂CO₃) (desirably ammonium sulfate).

In the ammonia aqueous solution, the concentration of ammonia is not particularly limited, but the higher the concentration is, the higher the leaching ability is. In view of this, the concentration of ammonia in the ammonia aqueous solution is, for example, 1 % by mass or more, desirably 5 % by mass or more, more desirably 10 % by mass or more, even more desirably15 % by mass or more. The upper limit of the concentration of ammonia is a saturated concentration of ammonia in water, and thus, is about 35 % by mass. From the viewpoint of leaching ability and ease of handling, the ammonia concentration is especially desirably 15 % by mass to 25 % by mass.

Ammonium sulfate and ammonium carbonate functions as pH adjusters. The amount of the pH adjuster in the ammonia aqueous solution is such that pH of the ammonia aqueous solution is, for example, 9 to 12, desirably 10 to 11.

The ammonia aqueous solution may contain only water, ammonia, and the pH adjuster. The ammonia aqueous solution may further contain a component other than water, ammonia, and the pH adjuster within a range that does not hinder advantages of the present disclosure (e.g., less than 10 % by mass, 5 % by mass or less, or 1 % by mass or less).

The amount of use of the ammonia aqueous solution is not particularly limited, and may be equal to or similar to the amount of use of an ammonia aqueous solution in a known ammonia leaching method. For example, the amount of use of the ammonia aqueous solution is an amount that allows the battery waste to be completely immersed.

The Mn leaching step S101 can be performed, for example, in the following manner. First, a vessel is prepared. The vessel may be a known vessel used for ammonia leaching. If necessary, a heating device such as a heater, a temperature measuring device such as a thermometer or a temperature sensor, a stirring device such as a stirring blade or a magnetic stirrer, and others are attached to the vessel.

The vessel is supplied with battery waste and an ammonia aqueous solution. The order of the supply is not particularly limited, and any of the battery waste and the ammonia aqueous solution may be supplied first, or these may be supplied simultaneously. Next, leaning conditions in the Mn leaching step S101 will be described.

A leaching condition in the Mn leaching step S101 is a condition under which the Mn leaching rate is 70% or more, and a ratio of the Mn leaching rate is 65% or more with respect to the total of the Ni leaching rate, the Co leaching rate, and the Mn leaching rate.

In the case of performing ammonia leaching on battery waste containing Ni, Co, and Mn, Mn is preferentially leached in an initial stage, but Mn is then precipitated from the leachate. This is supposed to be because of the following reasons. In the initial state, Mn is kinetically dissolved at a high rate, while Ni and Co are gradually dissolved. As time passes, since ammine complexes of Ni and Co are more stable than that of Mn, ammonium ions used for the dissolution of Mn are used for dissolution of Ni and Co (i.e., formation of ammine complexes), and Mn precipitates.

Thus, before the Mn precipitation, Mn can be preferentially leached into the aqueous phase. According to the actual investigation of the inventor of the present disclosure, as shown by results of test examples described later, when ammonia leaching is performed at low temperatures for a predetermined time, it has been found that Mn can be leached into the aqueous phase with a high leaching rate and relatively high selectivity before Mn precipitates.

In view of this, the leaching temperature in the Mn leaching step S101 is desirably more than 0°C and 45°C or less, more desirably from room temperature (i.e., 25±10°C) to 45°C. That is, the leaching temperature is desirably 15°C to 45°C.

It should be noted that even when the leaching temperature exceeds 45°C, if the leaching time is shortened, the Mn leaching rate can be 70% or more, and a ratio of the Mn leaching rate can be 65% or more with respect to the total of the Ni leaching rate, the Co leaching rate, and the Mn leaching rate. However, from the viewpoint of energy saving and ease of control of leaching conditions, the leaching temperature is desirably in the above-mentioned range.

The leaching time may be determined as appropriate depending on the leaching temperature. As the leaching temperature increases, leaching is allowed to be completed in a shorter time.

As an index of the leaching temperature (°C) and the leaching time (h), when the product of the leaching temperature (°C) and the leaching time (h) is in the range from 70 to 250 (particularly from 80 to 230), the above leaching conditions are likely to be satisfied.

From the viewpoint of energy saving, the Mn leaching step S101 is desirably performed at 25±10°C (i.e., room temperature) for 4 hours to 8 hours, more desirably performed at 25±10°C (i.e., room temperature) for 4 hours to 6 hours.

During leaching, stirring is desirably performed. The stirring speed is not particularly limited, and is desirably 200 rpm or more, more desirably 300 rpm or more, even more desirably 400 rpm or more. The stirring speed may be 2000 rpm or less, 1000 rpm or less, or 800 rpm or less.

Ammonia leaching is performed with reference to the above, and thereby Mn can be leached into the aqueous phase. That is, the Mn leaching step S101 can be carried out. Ammonia leaching can be finished by performing solid-liquid separation such as filtrate. Through this solid-liquid separation, a leachate (i.e., an aqueous phase in which Mn has been leached) and a solid residue can be obtained.

The Mn leaching step S101 may be performed only once, or may be performed multiple times. By performing the Mn leaching step S101 multiple times, a larger amount of Mn can be collected. In the case of performing the Mn leaching process S101 twice, first, Mn is leached by the ammonia leaching under the above conditions, followed by solid-liquid separation. Then, using a new ammonia aqueous solution, ammonia leaching is performed on the obtained solid residue under the above conditions. Furthermore, by performing solid-liquid separation and repeating ammonia leaching using a new ammonia aqueous solution under the above conditions on the obtained solid residue, the Mn leaching process S 101 can be performed three times or more.

### <Ni and Co Leaching Step S102>

In the Ni and Co leaching step S102, ammonia leaching is performed on a solid residue obtained in the Mn leaching step S101 under the condition that the Mn leaching rate is less than 1%, thereby leaching Ni and Co into an aqueous phase.

In the Ni and Co leaching step S102, ammonia leaching is also performed. A leaching agent is desirably an ammonia aqueous solution including water, ammonia (NH3), and a pH adjuster (e.g., ammonium sulfate, ammonium carbonate, or the like, desirably ammonium sulfate).

Specific contents (e.g., ammonia concentration, pH, etc.) of the ammonia aqueous solution are the same as or similar to those of the ammonia aqueous solution used in the Mn leaching step S101. The composition of the ammonia aqueous solution used in the Mn leaching step S101 may be the same or different from the composition of the ammonia aqueous solution used in the Ni and Co leaching step S102, desirably the same from the viewpoint of ease of implementation and ease of recycling.

The amount of use of the ammonia aqueous solution is not particularly limited, and may be substantially equal to or similar to the amount of use of an ammonia aqueous solution in a known ammonia leaching method. For example, the amount of use of the ammonia aqueous solution is an amount that allows the solid residue to be completely immersed.

As described above, in the case of performing ammonia leaching on the battery waste containing Ni, Co, and Mn, Mn is preferentially leached in the initial stage, but Mn is then precipitated. Thus, at this time, the leaching rate of Ni and Co is high, and the leaching rate of Mn is low. The higher the leaching temperature is, the higher the leaching rate of Ni and Co is, and consequently, Mn is precipitated quickly, and the Mn leaching rate decreases more.

The leaching temperature in the Ni and Co leaching step S102 is desirably 60°C or more, more desirably 70°C or more, even more desirably 80°C or more. It should be noted that the leaching temperature is less than the boiling point of water (i.e., less than 100°C).

It should be noted that even if the leaching temperature is less than 60°C, when the leaching time is increased, the Mn leaching rate can be less than 1%. However, from the viewpoint of production efficiency, the leaching temperature is desirably in the above-mentioned range.

The leaching time may be determined depending on the leaching temperature. The lower the leaching temperature is, the longer the leaching time is desirably selected. The leaching rate of Ni and Co tends to increase as the leaching time increases.

Thus, the Ni and Co leaching step S102 is desirably performed at 80°C or more for 2 hours or more (more desirably 6 hours or more, especially desirably 10 hours or more). Alternatively, the Ni and Co leaching step S102 is desirably performed at 70°C or more for 4 hours (more desirably 9 hours or more). Alternatively, the Ni and Co leaching step S102 is desirably performed at 60°C or more for 6 hours or more (more desirably 12 hours or more). The leaching time of the Ni and Co leaching step S102 may be 24 hours or less or 48 hours or less at any temperature.

During leaching, stirring is desirably performed. The stirring speed is not particularly limited, and is desirably 200 rpm or more, more desirably 300 rpm or more, even more desirably 400 rpm or more. The stirring speed may be 2000 rpm or less, 1000 rpm or less, or 800 rpm or less.

In ammonia leaching, Ni and Co are leached. Under the above conditions, the Ni leaching rate and the Co leaching rate are desirably 40% or more, more desirably 50% or more, respectively.

Ammonia leaching is performed with reference to the above, and thereby Ni and Co can be leached into the aqueous phase. That is, the Ni and Co leaching step S102 can be carried out. Ammonia leaching can be finished by performing solid-liquid separation such as filtrate. Through this solid-liquid separation, a leachate (i.e., an aqueous phase in which Ni and Co have been leached) and a solid residue can be obtained.

The Ni and Co leaching step S102 may be performed only once, or may be performed multiple times. By performing the Ni and Co leaching step S102 multiple times, a larger amount of Ni and Co can be collected. In the case of performing the Ni and Co leaching process S102 twice, Ni and Co are leached with ammonia under the above conditions from the solid residue obtained in the Mn leaching process S101, followed by solid-liquid separation. Then, using a new ammonia aqueous solution, ammonia leaching is performed on the obtained solid residue under the above conditions. Furthermore, by performing solid-liquid separation and repeating the ammonia leaching process using a new ammonia aqueous solution under the above conditions on the obtained solid residue, the Ni and Co leaching process S102 can be performed three times or more.

In the manner described above, all of Ni, Co, and Mn can be extracted into an aqueous phase from the battery waste containing Ni, Co, and Mn. Ni, Co, and Mn extracted in the aqueous phase can be collected according to a known method. Here, sulfate is typically used for a Ni source, a Co source, and a Mn source of a lithium nickel cobalt manganese composite oxide. Therefore, it is advantageous that Ni, Co, and Mn extracted in the aqueous phase are converted into nickel sulfate, cobalt sulfate, and manganese sulfate and collected according to a known method (e.g., by volatilizing ammonia from the aqueous phase and adding sulfuric acid to the aqueous phase). In this case, ammonium sulfate used for the ammonia aqueous solution can serve as a SO₄²⁻ source and cannot be an impurity, which is advantageous.

According to the method for recycling a positive electrode material according to the present disclosure, Ni, Co, and Mn can be efficiently collected from battery waste containing Ni, Co, and Mn by performing ammonia leaching in two stages under different conditions. Accordingly, the method for recycling a positive electrode material according to the present disclosure can be easily carried out. In addition, Ni, Co, and Mn derived from a lithium nickel cobalt manganese composite oxide can be collected by ammonia leaching, and thus, in the case of reproducing a lithium nickel cobalt manganese composite oxide using collected metal elements, Mn does not need to be newly added. Thus, the method for recycling a positive electrode material according to the present disclosure is significantly useful in material recycling of a lithium ion secondary battery.

Hereinafter, test examples related to the present disclosure will be described in detail, but the present disclosure is not intended to be limited to those shown in the examples.

### [Test Examples 1 to 15]

First, roasted black mass of a leach sample was prepared in the following procedure. A positive electrode including a positive electrode active material layer containing a lithium nickel cobalt manganese composite oxide (LiNi_{0.6}Co_{0.2}Mn_{0.2}O₂) on aluminum (Al) foil was crushed. The crushed material of the positive electrode was passed through a sieve with an aperture of 500 µm to produce positive electrode powder. A negative electrode including a negative electrode active material layer containing graphite on copper foil was crushed. The crushed material of the negative electrode was passed through a sieve with an aperture of 500 µm to produce negative electrode powder. The obtained positive electrode powder and negative electrode powder were mixed to obtain black mass. The black mass was roasted at 750°C for 6 hours under a low oxygen atmosphere, thereby obtaining roasted black mass in which most of metals was reduced.

Then, ammonia water with a concentration of 28 % by mass, and ammonium sulfate ((NH₄)₂SO₄) as a pH adjuster were mixed, thereby preparing an ammonia aqueous solution.

The roasted black mass was supplied into the ammonia aqueous solution. Thereafter, ammonia leaching was performed by stirring the ammonia aqueous solution at a stirring speed of 500 rpm for times shown Table 1 while maintaining the temperature of the ammonia aqueous solution at temperatures shown in Table 1. Subsequently, solid-liquid separation was performed by filtration, thereby obtaining a leachate and a solid residue.

### [Leaching Rate Evaluation]

First, 1 g of roasted black mass used as a leach sample was dissolved in acid, and the resulting mixture was subjected to high-frequency inductively coupled plasma (ICP) emission spectroscopy. From spectroscopic results, the amounts of Ni, Co, and Mn in the roasted black mass were obtained. These metal amounts correspond to initial amounts before ammonia leaching.

Then, leachates obtained by test examples were subjected to ICP emission spectroscopy, and the amounts of Ni, Co, and Mn in the leachate were obtained. The leaching rates (%) of Ni, Co, and Mn were obtained from the ratio (percentage) of the amounts of these metals in the leachate with respect to the initial amounts of the metals in the roasted black mass. Further, the ratio (%) of the Mn leaching rate with respect to the total leaching rate of Ni, Co, and Mn was calculated. Table 1 shows the results.

### [Table 1]

**Table 1**

| | Leaching Temperature (°C) | Leaching Time (h) | Leaching Rate (%) | | | Mn Leaching Rate Ratio (%) (Mn/Ni+Co+Mn) |
|---|---|---|---|---|---|---|
| | | | Ni | Co | Mn | |
| Test Example 1 | 80 | 2 | 43 | 50 | <1 | < 2 |
| Test Example 2 | 80 | 4 | 50 | 58 | <1 | <1 |
| Test Example 3 | 80 | 6 | 58 | 65 | <1 | <1 |
| Test Example 4 | 60 | 2 | 32 | 36 | 8 | 11 |
| Test Example 5 | 60 | 4 | 37 | 46 | 2 | 2 |
| Test Example 6 | 60 | 6 | 45 | 50 | <1 | < 2 |
| Test Example 7 | 45 | 2 | 10 | 12 | 95 | 81 |
| Test Example 8 | 45 | 4 | 13 | 16 | 88 | 75 |
| Test Example 9 | 45 | 6 | 20 | 24 | 68 | 61 |
| Test Example 10 | 25 | 2 | 5 | 8 | 58 | 82 |
| Test Example 11 | 25 | 4 | 8 | 13 | 92 | 81 |
| Test Example 12 | 25 | 6 | 13 | 14 | 95 | 78 |
| Test Example 13 | 25 | 8 | 15 | 17 | 90 | 74 |
| Test Example 14 | 25 | 12 | 16 | 16 | 70 | 53 |
| Test Example 15 | 25 | 18 | 20 | 24 | 55 | 56 |

The results of Table 1 show that when the leaching temperature is low and the leaching time is short, the Mn leaching rate tends to be high, and that when the leaching temperature is high and the leaching time is long, the Mn leaching rate tends to be low and the Ni and Co leaching rate tends to be high.

Thus, it can be understood that with the two-stage leaching method including the Mn leaching step of leaching Mn into the aqueous phase by performing ammonia leaching on battery waste containing Ni, Co, and Mn under the condition that the Mn leaching rate is 70% or more, a ratio of the Mn leaching rate is 65% or more with respect to the total of the Ni leaching rate, the Co leaching rate, and the Mn leaching rate, and the Ni and Co leaching step of leaching Ni and Co into the aqueous phase by performing ammonia leaching on the solid residue obtained in the Mn leaching step under the condition that the Mn leaching rate is less than 1%, Ni, Co, and Mn can be efficiently collected from the battery waste containing Ni, Co, and Mn. Accordingly, it can be understood that the method for recycling a positive electrode material according to the present disclosure is capable of efficiently collecting Ni, Co, and Mn from battery waste containing Ni, Co, and Mn.

It should be noted that test examples satisfying the leaching conditions of the Mn leaching step are test examples 7, 8, 11, 12, and 13, and that test examples satisfying the leaching conditions of the Ni and Co leaching step are test examples 1, 2, 3, and 6.

Specific examples of the present disclosure have been described in detail hereinbefore, but are merely illustrative examples, and are not intended to limit the scope of claims. The techniques described in claims include various modifications and changes of the above exemplified specific examples.

That is, the method for recycling a positive electrode material according to the present disclosure includes items [1] to [7].
[1] A method for recycling a positive electrode material including:
   a Mn leaching step of leaching Mn into an aqueous phase by performing ammonia leaching on battery waste containing Ni, Co, and Mn under a condition that a Mn leaching rate is 70% or more, and a ratio of the Mn leaching rate is 65% or more with respect to a total of a Ni leaching rate, a Co leaching rate, and the Mn leaching rate; and
   a Ni and Co leaching step of leaching Ni and Co into an aqueous phase by performing ammonia leaching on a solid residue obtained in the Mn leaching step under a condition that a Mn leaching rate is less than 1%.
[2] The method of item [1] in which the ammonia leaching in each of the Mn leaching step and the Ni and Co leaching step is performed using an ammonia aqueous solution containing water, ammonia, and ammonium sulfate.
[3] The method of item [1] or [2] in which the Mn leaching step is performed multiple times.
[4] The method of any one of items [1] to [3] in which the Ni and Co leaching step is performed multiple times.
[5] The method of any one of items [1] to [4] in which a leaching temperature in the Mn leaching step is more than 0°C and 45°C or less, a leaching temperature in the Ni and Co leaching step is 60°C or more and less than 100°C.
[6] The method of any one of items [1] to [5] in which the Mn leaching step is performed at 25±10°C for 4 hours to 8 hours.
[7] The method of any one of items [1] to [6] in which the Ni and Co leaching step is performed at 80°C or more for 2 hours or more.

## Claims

1. A method for recycling a positive electrode material, the method comprising:
a Mn leaching step (S101) of leaching Mn into an aqueous phase by performing ammonia leaching on battery waste containing Ni, Co, and Mn under a condition that a Mn leaching rate is 70% or more, and a ratio of the Mn leaching rate is 65% or more with respect to a total of a Ni leaching rate, a Co leaching rate, and the Mn leaching rate; and
a Ni and Co leaching step (S102) of leaching Ni and Co into an aqueous phase by performing ammonia leaching on a solid residue obtained in the Mn leaching step (S101) under a condition that a Mn leaching rate is less than 1%.

2. The method according to claim 1, wherein the ammonia leaching in each of the Mn leaching step (S101) and the Ni and Co leaching step (S102) is performed using an ammonia aqueous solution containing water, ammonia, and ammonium sulfate.

3. The method according to claim 1, wherein the Mn leaching step (S101) is performed multiple times.

4. The method according to claim 1, wherein the Ni and Co leaching step (S102) is performed multiple times.

5. The method according to claim 1, wherein a leaching temperature in the Mn leaching step (S101) is more than 0°C and 45°C or less, a leaching temperature in the Ni and Co leaching step (S102) is 60°C or more and less than 100°C.

6. The method according to claim 1, wherein the Mn leaching step (S101) is performed at 25±10°C for 4 hours to 8 hours.

7. The method according to claim 1, wherein the Ni and Co leaching step (S102) is performed at 80°C or more for 2 hours or more.
